# EUROPÄISCHE PATENTANMELDUNG

(11) **EP 4 631 804 A1**
(43) Veröffentlichungstag der Anmeldung: **15.10.2025**
(21) Anmeldenummer: 25164960.4
(22) Anmeldetag: 20.03.2025
(51) Int. Cl.: B60T 13/14, B60T 13/68, F16D 48/06, F16D 55/32, F16D 59/02, F16D 65/18, F16D 65/28, F16D 67/04, F16D 121/06

(54) **HYDRAULISCHE SICHERHEITSBREMSE ODER -KUPPLUNG**

(30) Priorität: 27.03.2024 DE 102024108775
(71) Anmelder: Ortlinghaus-Werke GmbH, 42929 Wermelskirchen (DE)
(72) Erfinder: BADE, Michael, 42929 Wermelskirchen (DE)
(74) Vertreter: Brinkmann & Partner

(57) **Zusammenfassung**

Die Erfindung betrifft eine hydraulische Bremse, Kupplung oder Kupplungs-Brems-Kombination für eine Arbeitsmaschine, die mittels eines von einer Hydraulikpumpe (18) geförderten Hydraulikmittels schaltbar ausgebildet ist, mit einer auf einer Welle verdrehfest, gleichwohl aber axial verschieblich angeordneten Rotorscheibe (4) und einem damit zusammenwirkenden Gegenstück (15), wobei das Gegenstück (15) in Relation zur Rotorscheibe (4) axial verschieblich gelagert ist, mit einem mechanischen Kraftgeber (17), der dazu eingerichtet ist, das Gegenstück (15) in axialer Richtung mit Kraft zu beaufschlagen, sowie mit einem von einer Zylinder-Kolben-Anordnung (12) bereitgestellten Hydraulikkolben (13), der in axialer Richtung verfahrbar ausgebildet und dazu eingerichtet ist, im Falle einer Druckbeaufschlagung mit von der Hydraulikpumpe (18) geförderten Hydraulikmittel entgegen der durch den Kraftgeber (17) bewirkten Kraftbeaufschlagung auf das Gegenstück (15) einzuwirken, wobei die Hydraulikpumpe (18) mit einem Hydraulikmittel beherbergenden Vorratsbehälter (20) strömungstechnisch zusammenwirkt, wobei die Hydraulikpumpe (18) und der Vorratsbehälter (20) für eine bestimmungsgemäße Verwendung ausschließlich mit der Zylinder-Kolben-Anordnung (12) ausgelegt sind, und wobei die Hydraulikpumpe (18) einen Elektromotor (19) aufweist, dadurch gekennzeichnet, dass eine die Hydraulikpumpe (18) strömungstechnisch umgehende Bypass-Leitung (24) vorgesehen ist, die den Vorratsbehälter (20) mit der Zylinder-Kolben-Anordnung (12) strömungstechnisch verbindet, wobei in die Bypass-Leitung (24) ein elektrisch schaltbares Ventil (25) integriert ist, das dazu eingerichtet ist, die Bypass-Leitung (24) im Falle einer Stromlosstellung des Ventils (25) zu öffnen, und dass der Elektromotor (19) sowie das elektrisch schaltende Ventil (25) signaltechnisch an einer gemeinsame Steuereinrichtung (26) angeschlossen sind, wobei die Steuereinrichtung (26), das elektrisch schaltende Ventil (25), der Vorratsbehälter (20) und die Hydraulikpumpe (18) gekapselt ausgebildet und in einem gemeinsamen Gehäuse untergebracht sind.

## Beschreibung

Die Erfindung betrifft eine hydraulische Bremse, Kupplung oder Kupplungs-Brems-Kombination für eine Arbeitsmaschine, die mittels eines von einer Hydraulikpumpe geförderten Hydraulikmittels schaltbar ausgebildet ist, mit einer auf einer Welle verdrehfest, gleichwohl aber axial verschieblich angeordneten Rotorscheibe und einem damit zusammenwirkenden Gegenstück, wobei das Gegenstück in Relation zur Rotorscheibe axial verschieblich gelagert ist, mit einem mechanischen Kraftgeber, der dazu eingerichtet ist, das Gegenstück in axialer Richtung mit Kraft zu beaufschlagen, sowie mit einem von einer Zylinder-Kolben-Anordnung bereitgestellten Hydraulikkolben, der in axialer Richtung verfahrbar ausgebildet und dazu eingerichtet ist, im Falle einer Druckbeaufschlagung mit von der Hydraulikpumpe geförderten Hydraulikmittel entgegen der durch den Kraftgeber bewirkten Kraftbeaufschlagung auf das Gegenstück einzuwirken, wobei die Hydraulikpumpe mit einem Hydraulikmittel beherbergenden Vorratsbehälter strömungstechnisch zusammenwirkt, wobei die Hydraulikpumpe und der Vorratsbehälter für eine bestimmungsgemäße Verwendung ausschließlich mit der Zylinder-Kolben-Anordnung ausgelegt sind, und wobei die Hydraulikpumpe einen Elektromotor aufweist. Insbesondere betrifft die Erfindung eine Sicherheitsbremse, -kupplung oder -Kupplungs-Brems-Kombination.

Eine hydraulische Bremse oder Kupplung für eine Arbeitsmaschine ist beispielsweise aus der DE 10 2004 025 296 A1 bekannt.

Die aus der DE 10 2004 025 296 A1 bekannte Bremse oder Kupplung ist mittels eines von einer Hydraulikpumpe geförderten Hydraulikmittels schaltbar. Dabei ist vorgesehen, dass im Falle einer Sicherheitsbremse eine hydraulische Kraftbeaufschlagung ein Lüften, d. h. ein Öffnen der Bremse bewirkt. Im Falle einer Sicherheitskupplung erfolgt ein hydraulisches Schließen.

Die aus der DE 10 2004 025 296 A1 vorbekannte Bremse oder Kupplung verfügt über eine Rotorscheibe, die verdrehfest, gleichwohl aber axial verschieblich auf einer Welle angeordnet ist. Die Rotorscheibe kann mithin zusammen mit der Welle verdrehen, ist insofern also verdrehfest auf der Welle angeordnet. Für ein Schalten der Bremse oder Kupplung ist die Rotorscheibe in Längsrichtung der Welle, d. h. axial verschieblich auf der Welle angeordnet. Im Schaltfall findet mithin eine Relativbewegung der Rotorscheibe zur Welle statt, und zwar in Wellenlängsrichtung, d. h. axial.

Die Bremse oder Kupplung verfügt des Weiteren über ein mit der Rotorscheibe zusammenwirkendes Gegenstück. Dieses Gegenstück kann beispielsweise als Druckplatte ausgebildet sein.

Das Gegenstück ist in Relation zur Rotorscheibe axial verschieblich gelagert, kann mithin in axialer Richtung zur Rotorscheibe hin bzw. in entgegengesetzter Richtung von dieser wegbewegt werden.

Es ist des Weiteren ein mechanischer Kraftgeber vorgesehen, beispielsweise in der Ausgestaltung einer Druckfeder oder einer Vielzahl von Druckfedern. Dabei ist der Kraftgeber dazu eingerichtet, das Gegenstück in axialer Richtung mit Kraft zu beaufschlagen. Im Falle einer Sicherheitsbremse wird das Gegenstück durch den Kraftgeber in Richtung auf die Rotorscheibe kraftbeaufschlagt, im Falle einer Sicherheitskupplung in umgekehrter Richtung.

Die Bremse oder Kupplung verfügt des Weiteren über einen von einer Zylinder-Kolben-Anordnung bereitgestellten Hydraulikkolben. Dieser ist in axialer Richtung verfahrbar ausgebildet und dazu eingerichtet, im Falle einer Druckbeaufschlagung mit von der Hydraulikpumpe gefördertem Hydraulikmittel entgegen der durch den Kraftgeber bewirkten Kraftbeaufschlagung auf das Gegenstück einzuwirken. Im Falle einer Druckbeaufschlagung des Hydraulikkolbens mit einem Hydraulikmittel wird mithin das Gegenstück in axialer Richtung bewegt, und zwar entgegen der vom mechanischen Kraftgeber bereitgestellten Krafteinwirkung.

Im Falle einer Sicherheitsbremse ist die Bremse aufgrund der vom mechanischen Kraftgeber bereitgestellten Kraft geschlossen. Das Gegenstück wirkt in dieser geschlossenen Stellung auf die Rotorscheibe ein und setzt diese fest, einschließlich der damit verdrehfest verbundenen Welle. Infolge einer bestimmungsgemäßen Beaufschlagung des Hydraulikkolbens mit Hydraulikmittel wird die Bremse geöffnet. In diesem Fall wirkt der Hydraulikkolben entgegen der vom Kraftgeber bereitgestellten Kraft auf das Gegenstück ein, infolgedessen sich dieses in axialer Richtung von der Rotorscheibe wegbewegt. Die Rotorscheibe ist infolgedessen freigesetzt, sodass eine Verdrehbewegung derselben ermöglicht ist, einschließlich der damit verdrehfest verbundenen Welle.

Im Falle einer Sicherheitskupplung ist die anhand einer Sicherheitsbremse vorbeschriebene Wirkungsweise umgekehrt. So ist die Kupplung infolge der vom mechanischen Kraftgeber bereitgestellten Kraft geöffnet. Ein Schließen der Kupplung findet infolge einer Beaufschlagung des Hydraulikkolbens mit Hydraulikmittel statt, infolgedessen das Gegenstück entgegen der Einwirkung des Kraftgebers in axialer Richtung auf die Rotorscheibe zubewegt wird.

Eine gattungsgemäße Sicherheitsbremse offenbart die DE 10 2007 060 286 A1. Diese vorbekannte Sicherheitsbremse weist eine Bremsscheibe auf, die verdrehfest, gleichwohl aber axial verschieblich auf einer Welle angeordnet ist. Die Bremsscheibe kann mithin zusammen mit der Welle verdrehen, ist insofern also verdrehfest auf der Welle angeordnet. Für ein Schalten der Bremse oder Kupplung ist die Bremsscheibe in Längsrichtung der Welle, d. h. axial verschieblich auf der Welle angeordnet. Im Schaltfall findet mithin eine Relativbewegung der Bremsscheibe zur Welle statt, und zwar in Wellenlängsrichtung, d. h. axial.

Die Sicherheitsbremse verfügt des Weiteren über mit der Bremsscheibe zusammenwirkende Gegenstücke in Form Gehäusereibscheiben. Die Gehäusereibscheiben sind in Relation zur Bremsscheibe axial verschieblich gelagert, können folglich in axialer Richtung zur Bremsscheibe hin bzw. in entgegengesetzter Richtung von dieser wegbewegt werden. Zu diesem Zweck sind die Gehäusereibscheiben an Führungshülsen axial beweglich gelagert und in Umfangsrichtung fixiert.

Es sind des Weiteren mechanische Kraftgeber in Form von Federpaketen vorgesehen. Dabei sind die Kraftgeber dazu eingerichtet, die Gehäusereibscheiben in axialer Richtung zur Bremsscheibe hin mit Kraft zu beaufschlagen.

Zum Lüften der Sicherheitsbremse weist diese mehrere Zylinder-Kolben-Anordnungen auf. Werden die Arbeitsräume der Zylinder-Kolben-Anordnungen mit Hydraulikmittel unter Druck beaufschlagt, so bewegen sich die Hydraulikkolben entgegen der Kraftbeaufschlagung durch die Federpakete und heben den Kontakt zwischen den Gehäusereibscheiben und der Bremsscheibe auf.

Die Druckbeaufschlagung der Zylinder-Kolben-Anordnungen erfolgt durch Hydraulikmittel. Das Hydraulikmittel wird aus einem Volumenspeicher mittels einer durch einen Antriebsmotor angetriebenen Hydraulikpumpe in die Arbeitsräume der Zylinder-Kolben-Anordnungen gefördert. Um zu vermeiden, dass die Hydraulikpumpe und damit der Antriebsmotor konstant betrieben werden muss, um den gewünschten Hydraulikdruck zum Lüften der Sicherheitsbremse aufrechtzuerhalten, verfügt die Sicherheitsbremse über einen Sperrblock.

Zur Steuerung der Sicherheitsbremse ist es verwenderseitig notwendig, diese an eine externe Steuereinrichtung anzuschließen.

Die DE 10 2017 109 828 A1 offenbart eine Fluidsteuerung für eine Stellzylinderanordnung eines Bremslüftgeräts und ein solches Bremslüfgerät. Das Bremslüftgerät weist eine Stellzylinderanordnung, eine Tankbaugruppe, eine Funktionseinheit, eine Fluidsteuerung und eine elektrische Antriebseinheit auf. Die einzelnen Bauelemente werden durch einen Deckel und einen Boden zusammengehalten. An der Tankbaugruppe, der Funktionseinheit und der elektrische Antriebseinheit ist ein Anschlusskasten angeordnet.

Der Druckaufbau in der Stellzylinderanordnung erfolgt durch die Fluidsteuerung. Eine in der Fluidsteuerung angeordnete Hydraulikpumpe, fördert hierzu ein Hydraulikmittel aus der Tankbaugruppe über eine Vorlaufstrang in einen Druckraum der Stellzylinderanordnung. Das Zurückfließen von Hydraulikmittel wird durch ein Rückschlagventil verhindert.

Für den Druckabbau ist ein Rücklaufstrang vorgesehen, welcher sich in zwei Rücklaufzweige aufteilt. In einem ersten Rücklaufzweig sind zwei parallel geschaltete Stellventile vorgesehen, die stromlos geöffnet sind. In einem zweiten Rücklaufzweig ist ein weiteres Stellventil vorgesehen, dass ebenfalls stromlos geöffnet ist. Mit dieser Stellventilanordnung kann der Druckabbau und damit die Bremsgeschwindigkeit in drei unterschiedlichen Geschwindigkeiten realisiert werden. Hierzu werden entweder alle Stellventile geöffnet oder nur die Stellventile des ersten Rücklaufstrangs oder nur das Stellventil des zweiten Rücklaufstrangs.

Den Stellventilen können in einer alternativen Ausführungsform der Erfindung Drosselventile vorgeschaltet sein, wodurch sich die Bremsgeschwindigkeit über den Strömungsquerschnitt der Drosselventile einstellen lässt. Alternativ kann auch nur den Stellventilen des ersten Rücklaufstrangs ein Drosselventil vorgeschaltet sein oder das Stellventil des zweiten Rücklaufstrangs kann durch ein Proportionalventil ersetzt sein.

Die Steuerung der Stellventile erfolgt über eine Ansteuerung, welche entweder in dem Anschlusskasten angeordnet ist oder in einer externen Anlagensteuerung. Die Steuerung der Hydraulikpumpe erfolgt über einen Druckschalter, welcher innerhalb der Fluidsteuerung angeordnet ist und/oder einen an der Stellzylindereinheit angeordneten Positionssensor.

Obgleich sich die vorbeschriebenen Bremsen, Kupplungen oder Kupplungs-Brems-Kombinationen im Praxiseinsatz bewährt haben, besteht Verbesserungsbedarf. Von Nachteil ist, dass eine Steuerung und/oder Regelung der Bremsen, Kupplungen oder Kupplungs-Brems-Kombinationen im bestimmungsgemäßen Betrieb aufwendig ist und gegebenenfalls entsprechender zusätzlicher Einrichtungen bedarf. Des Weiteren müssen anwenderseitig weitere für den Betrieb einer Bremse, Kupplung oder Kupplungs-Brems-Kombination essenziele Bauteile vorgehalten werden, was insbesondere im Fall einer Erstausrüstung als nachteilig empfunden wird.

Es ist deshalb die **Aufgabe** der Erfindung, eine hydraulische Bremse, Kupplung oder Kupplungs-Brems-Kombination der gattungsgemäßen Art vorzuschlagen, die konstruktiv dahingehend weiterentwickelt ist, dass eine vereinfachte Handhabung gestattet ist, und zwar sowohl hinsichtlich einer Erstausrüstung als auch bezüglich einer Steuerung und/oder Regelung im bestimmungsgemäßen Verwendungsfall, wobei auch der konstruktive Aufwand bei der Herstellung reduziert, die allgemeine Sicherheit verbessert und eine besonders kompakte Bauform erreicht werden soll.

Zur **Lösung** dieser Aufgabe wird mit der Erfindung eine hydraulische Bremse, Kupplung oder Kupplungs-Brems-Kombination, insbesondere eine Sicherheitsbremse, -kupplung oder -Kupplungs-Brems-Kombination der eingangs genannten Art vorgeschlagen, wobei die Hydraulikpumpe mit einem Hydraulikmittel beherbergenden Vorratsbehälter strömungstechnisch zusammenwirkt, wobei die Hydraulikpumpe und der Vorratsbehälter für eine bestimmungsgemäße Verwendung ausschließlich mit der Zylinder-Kolben-Anordnung ausgelegt sind, , die sich dadurch auszeichnet, dass eine die Hydraulikpumpe strömungstechnisch umgehende Bypass-Leitung vorgesehen ist, die den Vorratsbehälter mit der Zylinder-Kolben-Anordnung strömungstechnisch verbindet, wobei in die Bypass-Leitung ein elektrisch schaltendes Ventil integriert ist, das dazu eingerichtet ist, die Bypass-Leitung im Falle einer Stromlosstellung des Ventils zu öffnen, und dass der Elektromotor sowie das elektrisch schaltende Ventil signaltechnisch an eine gemeinsame Steuereinrichtung angeschlossen sind, wobei die Steuereinrichtung, das elektrisch schaltende Ventil, der Vorratsbehälter und die Hydraulikpumpe gekapselt ausgebildet und in einem gemeinsamen Gehäuse untergebracht sind.

Die nach der Erfindung vorgesehene Bremse, Kupplung oder Kupplungs-Brems-Kombination verfügt zur Bevorratung von Hydraulikmittel über einen Vorratsbehälter. Dieser Vorratsbehälter steht in strömungstechnischer Verbindung mit der Hydraulikpumpe. Im bestimmungsgemäßen Verwendungsfall kann so vom Vorratsbehälter bereitgestelltes Hydraulikmittel mittels der Hydraulikpumpe gefördert und zur Druckbeaufschlagung des Hydraulikkolbens in die Zylinder-Kolben-Anordnung überführt werden. Die Hydraulikpumpe und der Vorratsbehälter wirken insofern strömungstechnisch zusammen.

Die Hydraulikpumpe und der Vorratsbehälter sind für eine bestimmungsgemäße Verwendung ausschließlich der Zylinder-Kolben-Anordnung ausgelegt. "Ausschließlich" im Sinne der Erfindung meint dabei, dass die Hydraulikpumpe und der Vorratsbehälter derart dimensioniert, d. h. ausgelegt sind, dass ein bestimmungsgemäßer Betrieb der Zylinder-Kolben-Anordnung der betroffenen, einen Sicherheitsbremse oder -kupplung ermöglicht ist. Die Hydraulikpumpe und der zugehörige Vorratsbehälter sind mithin nicht dazu ausgelegt, Zylinder-Kolben-Anordnungen mehrerer Sicherheitsbremsen oder -kupplungen gleichermaßen betreiben zu können. Dabei sind die Hydraulikpumpe und der Vorratsbehälter mit Bezug auf die Sicherheitsbremse oder -kupplung insbesondere dahingehend ausgelegt, dass der im bestimmungsgemäßen Betriebsfall erforderliche Betriebsdruck erzeugt und auf den Hydraulikkolben der Zylinder-Kolben-Anordnung aufgebracht werden kann. Aus dem Stand der Technik sind Hydraulikanordnungen bekannt, die dazu eingerichtet sind, eine Mehrzahl von Zylinder-Kolben-Anordnungen, d. h. eine Mehrzahl von Sicherheitsbremsen oder -kupplungen gleichermaßen betreiben zu können. Im Unterschied hierzu wird mit der Erfindung eine Auslegung vorgeschlagen, die darauf abstellt, dass der Zylinder-Kolben-Anordnung einer Sicherheitsbremse oder -kupplung eine Hydraulikpumpe samt Vorratsbehälter zugeordnet ist, wobei die Hydraulikpumpe und der zugehörige Vorratsbehälter ausschließlich dazu dienen, diese ihnen zugeordnete Zylinder-Kolben-Anordnung bestimmungsgemäß betreiben zu können. Bei der gleichzeitigen Verwendung mehrerer Sicherheitsbremsen oder -kupplungen kommen mithin eine der Anzahl der verwendeten Sicherheitsbremsen oder -kupplungen entsprechenden Anzahl an separat voneinander betriebenen Hydraulikpumpen samt Vorratsbehältern zum Einsatz, wobei je Sicherheitsbremse oder -kupplung eine Hydraulikpumpe samt Vorratsbehälter vorgesehen ist.

Gemäß einem ersten Aspekt der Erfindung ist vorgesehen, dass eine die Hydraulikpumpe strömungstechnisch umgebende Bypass-Leitung vorgesehen ist. Diese Bypass-Leitung verbindet den Vorratsbehälter mit der Zylinder-Kolben-Anordnung strömungstechnisch. Es ist mithin über die Bypass-Leitung eine direkte strömungstechnische Verbindung zwischen der Zylinder-Kolben-Anordnung und dem Vorratsbehälter vorgesehen, d. h. eine strömungstechnische Verbindung ohne Zwischenschaltung der Hydraulikpumpe.

In die Bypass-Leitung ist ein elektrisch schaltendes Ventil integriert. Dieses Ventil ist dazu eingerichtet, die Bypass-Leitung im Falle einer Stromlosstellung des Ventils zu öffnen.

Sofern also das elektrisch schaltende Ventil bestromt wird, ist die Bypass-Leitung geschlossen. In diesem Fall kann ausschließlich über die Hydraulikpumpe Hydraulikmittel in die Zylinder-Kolben-Anordnung eingebracht werden. Im Falle einer Stromlosstellung des Ventils, sei es aktiv durch Schaltung des Ventils oder im Falle eines Stromausfalls, schaltet das Ventil auf offen, womit die Bypass-Leitung geöffnet ist. In dieser Offen-Stellung des Ventils kann Hydraulikmittel an der Hydraulikpumpe vorbei aus der Zylinder-Kolben-Anordnung zurück in den Vorratsbehälter überführt werden. Infolge einer solchen Rücküberführung wird der zugehörige Hydraulikkolben der Zylinder-Kolben-Anordnung hydraulikmittelfrei gestellt, sodass eine Kraftbeaufschlagung des Gegenstücks nur noch durch den Kraftgeber, nicht mehr aber durch den Hydraulikkolben stattfindet.

Gemäß einem zweiten Aspekt der Erfindung ist vorgesehen, dass der Elektromotor sowie das elektrisch schaltende Ventil signaltechnisch an eine gemeinsame Steuereinrichtung angeschlossen sind.

Mittels der bremsen-, kupplungs- oder kombinationseigenen Steuereinrichtung erfolgt eine Steuerung bzw. Regelung sowohl des Elektromotors als auch des elektrisch schaltenden Ventils. Zu diesem Zweck sind sowohl der Elektromotor als auch das elektrisch schaltende Ventil signaltechnisch an die gemeinsame Steuereinrichtung angeschlossen.

Im bestimmungsgemäßen Verwendungsfall sorgt die Steuereinrichtung bei geschlossenem Ventil für einen Betrieb des Elektromotors, mithin für einen Betrieb der Hydraulikpumpe. Im Arbeitsraum der Zylinder-Kolben-Anordnung kann so ein entsprechender Druck aufgebaut werden, was zu einer bestimmungsgemäßen Schaltung der Bremse, Kupplung oder Kupplungs-Bremskombination führt. Dabei ist es nicht erforderlich, den Elektromotor im Dauerbetrieb zu betreiben. Vielmehr kann der Elektromotor mit Erreichen des gewünschten Hydraulikdrucks abgeschaltet werden. Das System hält alsdann diesen Druck, vorausgesetzt natürlich, dass das gesamte System insgesamt leckagearm bzw. leckagefrei ausgebildet ist.

Soll ein erneutes Schalten der Bremse, Kupplung oder Kupplungs-Brems-Kombination durch Abbau des Hydraulikdrucks erfolgen, sind über die Steuereinrichtung sowohl der elektrische Motor der Hydraulikpumpe als auch das elektrisch schaltende Ventil stromlos zu stellen. Infolgedessen öffnet die Bypass-Leitung und es kann ein Druckabbau innerhalb der Arbeitskammer, auch Arbeitsraum genannt, der Zylinder-Kolben-Anordnung dadurch stattfinden, dass in der Arbeitskammer, d.h. in dem Arbeitsraum befindliches Hydraulikmittel über die Bypass-Leitung in Richtung des Vorratsbehälters abgeführt wird.

Von besonderem Vorteil dieser Anordnung ist ferner, dass die Sicherheitsfunktion der Bremse, Kupplung oder Kupplungs-Brems-Kombination nach wie vor gewahrt ist. Denn im Defektfall schaltet die Bremse, Kupplung oder Kupplungs-Brems-Kombination, sei es, dass das Hydrauliksystem einen Fehler aufweist, beispielsweise durch Leckage, oder dass es stromseitig zu einem Fehler kommt, beispielsweise durch einen Ausfall der Stromversorgung. Im Falle eines Stromausfalls wird ein sofortiger Abbau der hydraulikkolbenseitigen Druckbeaufschlagung des Gegenstücks durch Abströmen von Hydraulikmittel aus dem Arbeitsraum der Zylinder-Kolben-Anordnung in den Vorratsbehälter erreicht, sodass im Falle einer Bremse ein sofortiges Schließen und im Falle einer Kupplung ein sofortiges Öffnen stattfindet. Insofern kann die erfindungsgemäße Bremse, Kupplung oder Kupplungs-Brems-Kombination auch als Sicherheitsbremse, -kupplung oder - Kupplungs-Brems-Kombination bezeichnet werden.

Des Weiteren wird durch die Verwendung einer einzigen, gemeinsamen Steuereinrichtung der konstruktive Aufwand bei der Herstellung der Bremse, Kupplung oder Kupplungs-Brems-Kombination reduziert.

Gemäß einem dritten Aspekt der Erfindung ist vorgesehen, dass die Steuereinrichtung, das elektrisch schaltende Ventil, der Vorratsbehälter und die Hydraulikpumpe gekapselt ausgebildet und in einem gemeinsamen Gehäuse untergebracht sind.

Hierdurch wird eine besonders kompakte Bauform erreicht. Die einzelnen Baukomponenten des Hydraulikaggregats, d. h. die Steuereinrichtung, das elektrisch schaltende Ventil, der Vorratsbehälter und die Hydraulikpumpe sind zu einer separaten Baugruppe zusammengefasst und in einem dafür vorgesehenen Gehäuse untergebracht. Insofern ist eine gekapselte Ausgestaltung erreicht. Diese Baugruppe ist bevorzugterweise herstellerseitig vorausgebildet und für eine bestimmungsgemäße Verwendung einer Sicherheitsbremse oder -kupplung an dieser angeordnet. Verwenderseitig ist es dann in vorteilhafter Weise nur noch erforderlich, die Sicherheitsbremse oder -kupplung an Signalleitungen für die Steuereinrichtung einerseits sowie an eine elektrische Stromversorgung für den Elektromotor der Hydraulikpumpe und das elektrisch schaltende Ventil anzuschließen. Die erfindungsgemäße Ausgestaltung macht es möglich, eine hydraulisch arbeitende Bremse, Kupplung oder Kupplungs-Brems-Kombination rein elektrisch anzusteuern. Dabei ist es für eine bestimmungsgemäße Installation nicht erforderlich, die Bremse, Kupplung oder Kupplungs-Brems-Kombination an Hydraulikleitungen anzuschließen. Denn die autarke Ausgestaltung der Bremse, Kupplung oder Kupplungs-Brems-Kombination mit einer eigenen Hydraulikpumpe samt Vorratsbehälter macht es möglich, eine bremsenseitige, -kupplungsseitige oder kombinationsseitige Vormontage vorzunehmen. Der eigentliche Anschluss bzw. die eigentliche Installation vor Ort erfolgt dann nur noch durch eine elektrische Anbindung der Hydraulikpumpe und des elektrisch schaltenden Ventils an einer elektrischen Stromversorgung.

Da das erfindungsgemäße Hydraulikaggregat autark ausgebildet ist und im Übrigen eine Dimensionierung aufweist, die ausschließlich für einen bestimmungsgemäßen Betrieb der Zylinder-Kolben-Anordnung einer Sicherheitsbremse oder -kupplung ausgelegt ist, kann das von dem Vorratsbehälter bereitgestellte Vorratsvolumen entsprechend gering ausfallen. Dies ist insbesondere aus Umweltgründen von Vorteil und auch hinsichtlich eines vereinfachten Handlings und der Betriebskosten vorteilhaft.

Ferner ist auch das anwenderseitige Vorhalten einer externen Steuereinrichtung und/oder weiterer für den Betrieb der Bremse, Kupplung oder Kupplungs-Brems-Kombination essenzieller Bauteile durch die erfindungsgemäße Ausgestaltung nicht nötig, was eine vereinfachte Handhabung sowohl hinsichtlich der Erstausrüstung als auch der Steuerung und/oder Regelung im bestimmungsgemäßen Verwendungsfall gestattet. Ebenso ist der konstruktive Aufwand bei der Herstellung einer Bremse, Kupplung oder Kupplungs-Brems-Kombination in der erfindungsgemäßen Ausgestaltung durch die Nutzung einer einzigen, gemeinsamen Steuereinrichtung gegenüber dem Stand der Technik verringert.

Durch die gekapselte Ausgestaltung und die gemeinsame Unterbringung der einzelnen Baukomponenten des Hydraulikaggregats, d. h. der Steuereinrichtung, des elektrisch schaltenden Ventils, des Vorratsbehälters und der Hydraulikpumpe in einem gemeinsamen Gehäuse wird eine besonders kompakte Bauform erreicht. Auch eine versehentliche anwenderseitige Manipulation beispielweise des elektrisch schaltenden Ventils wird durch das Gehäuse verhindert, ebenso wird eventuell austretendes Hydraulikmittel im Gehäuse gehalten und somit eine Verteilung von Hydraulikmittel in der Umgebung der Bremse, Kupplung oder Kupplungs-Brems-Kombination und eine damit einhergehende Umwelt- und Unfallgefahr verhindert, wodurch die allgemeine Sicherheit der Bremse, Kupplung oder Kupplungs-Brems-Kombination verbessert wird.

Mit der erfindungsgemäßen Ausgestaltung wird mithin eine insgesamt hydraulisch arbeitende, gleichwohl aber lediglich elektrisch anzuschließende Bremse, Kupplung oder Kupplungs-Brems-Kombination vorgeschlagen, mithin eine elektrohydraulisch arbeitende Bremse, Kupplung oder Kupplungs-Brems-Kombination.

Die erfindungsgemäße elektrohydraulisch arbeitende Bremse, Kupplung oder Kupplungs-Brems-Kombination wird herstellerseitig anschlussfertig hergestellt, so dass keine essentiellen Bauteile und/oder eine externe Steuereinrichtung anwenderseitig für den bestimmungsgemäßen Verwendungsfall vorgehalten werden müssen. Hierdurch ergibt sich anwenderseitig eine vereinfachte Handhabung hinsichtlich der Erstausstattung.

Aus dem Stand der Technik sind bereits elektromagnetisch arbeitende Bremsen oder Kupplungen bekannt. Diese weisen allerdings im Unterschied zur erfindungsgemäßen Ausgestaltung den Nachteil auf, bei gleicher Baugröße nur geringere Drehmomente übertragen zu können. Die erfindungsgemäße Ausgestaltung erbringt mithin den Vorteil, dass aufgrund des hydraulischen Arbeitsprinzips hohe Drehmomente übertragen werden können, dies aber bei einer gleichzeitig sehr viel kompakteren Bauform im Vergleich zu herkömmlichen hydraulischen Bremsen oder Kupplungen. Mit der erfindungsgemäßen Ausgestaltung wird mithin der synergetische Effekt erzielt, einerseits hydraulisch bedingt hohe Drehmomente übertragen und andererseits eine vereinfachte Handhabung insbesondere im Falle einer Erstinbetriebnahme sowie im bestimmungsgemäßen Verwendungsfall hinsichtlich der Regelung bewirken zu können.

Aus dem Stand der Technik sind auch gattungsgemäße hydraulisch arbeitende Bremsen, Kupplungen oder Kupplungs-Brems-Kombinationen bekannt, die elektrisch steuerbar bzw. regelbar sind. Von Nachteil ist, dass bei diesen Bremsen, Kupplungen oder Kupplungs-Brems-Kombinationen nicht alle für den bestimmungsgemäßen Verwendungsfall essenziellen Bauteile aufweisen. Folglich muss hier der Anschluss solcher Bauteile noch anwenderseitig vor Ort erfolgen. Hierzu müssen die entsprechenden Bauteile vorgehalten werden. Damit die Auslegung der Bauteile beispielweise der Sicherheitsbremse zu den entsprechenden Hydraulikaggregat der jeweiligen Bremse, Kupplung oder Kupplungs-Brems-Kombination passt, müssen die entsprechenden Bauteile und das Hydraulikaggregat der Bremse, Kupplung oder Kupplungs-Brems-Kombination aufeinander abgestimmt werden, was ebenfalls einen anwenderseitigen Mehraufwand bedeutet.

Gemäß einem weiteren Merkmal der Erfindung ist vorgesehen, dass gehäuseaußenseitig zugängliche Anschlüsse für einen Signalanschluss der Steuereinrichtung einerseits und für einen elektrischen Anschluss des Elektromotors und des elektrisch schaltenden Ventils vorgesehen sind. Für eine bestimmungsgemäße Installation der erfindungsgemäßen Sicherheitsbremse oder -kupplung ist es mithin verwenderseitig allein erforderlich, entsprechende Anschlussleitungen an die gehäuseaußenseitig zugänglichen Anschlüsse anzuschließen.

Gemäß einem weiteren Merkmal der Erfindung ist vorgesehen, dass das Gehäuse, das die Steuereinrichtung, das elektrisch schaltende Ventil, den Vorratsbehälter und die Hydraulikpumpe aufnimmt als ein Gehäuseteil eines die Bremse oder Kupplung beherbergenden Gehäuses ausgebildet ist. Demnach ist das gesamte Hydraulikaggregat der erfindungsgemäßen Ausgestaltung als integraler Bestandteil der Sicherheitsbremse oder -kupplung ausgebildet. Es ist hierdurch eine insgesamt besonders kompakte Bauform erreicht.

Alternativ zur vorbeschriebenen Ausgestaltung kann vorgesehen sein, dass das die Steuereinrichtung, das elektrisch schaltende Ventil, den Vorratsbehälter und die Hydraulikpumpe aufnehmende Gehäuse als ein zum Gehäuse der Sicherheitsbremse oder -kupplung separates Gehäuse ausgebildet ist, das an dem Gehäuse der Sicherheitsbremse oder -kupplung angeordnet ist. Diese Ausgestaltung erbringt insbesondere den Vorteil mit sich, bestehende hydraulische Sicherheitsbremsen oder -kupplungen nachrüsten zu können.

Gemäß einem weiteren Merkmal der Erfindung ist vorgesehen, dass die Hydraulikpumpe mittels einer Hydraulikleitung mit der Zylinder-Kolben-Anordnung strömungstechnisch verbunden ist, wobei in die Hydraulikleitung ein Rückschlagventil integriert ist.

Mittels des Rückschlagventils ist in vorteilhafter Weise sichergestellt, dass aus dem Arbeitsraum der Zylinder-Kolben-Anordnung nicht ungewollt Hydraulikmittel zurück in die Hydraulikpumpe und/oder den Vorratsbehälter strömt. Dabei kann dank des Rückschlagventils bei hinreichend aufgebautem Hydraulikdruck der Elektromotor ausgeschaltet werden, ohne dass die Gefahr einer Hydraulikmittelrücküberführung besteht. Hierdurch bedingt ist der Stromverbrauch im bestimmungsgemäßen Verwendungsfall der Sicherheitsbremse oder -kupplung minimiert.

Gemäß einem weiteren Merkmal der Erfindung ist vorgesehen, dass das elektrisch schaltbare Ventil derart eingerichtet ist, dass für ein Halten einer Ventilstellung im Vergleich zu einem Schalten in eine andere Ventilstellung ein verringerter Stromverbrauch stattfindet. Das elektrisch schaltbare Ventil kann zwei unterschiedliche Ventilstellungen einnehmen. In einer Ventilstellung ist das elektrisch schaltbare Ventil vollständig geöffnet. In einer weiteren Ventilstellung ist das elektrisch schaltbare Ventil vollständig geschlossen. Für das Schalten des Ventils von der einen Ventilstellung in die andere Ventilstellung wird ein Schaltstrom benötigt. Liegt der Schaltstrom an, wird Strom verbraucht. Für das Geschlossenhalten des elektrisch schaltbaren Ventils wird ein Haltestrom benötigt. Auch wenn der Haltestrom anliegt, wird Strom verbraucht. Der Stromverbrauch durch den Haltestrom ist geringer als der Stromverbrauch durch den Schaltstrom. Diese Ausgestaltung des elektrisch schaltbaren Ventils erbringt den Vorteil, dass ein erfindungsgemäßes Geöffnethalten der Sicherheitsbremse mit einem verringerten Stromverbrauch energieeffizient möglich ist.

Gemäß einem weiteren Merkmal der Erfindung ist es vorgesehen, dass eine die Hydraulikpumpe strömungstechnisch umgehende Hydraulikleitung vorgesehen ist, die den Vorratsbehälter mit der Zylinder-Kolben-Anordnung strömungstechnisch verbindet, wobei in die Hydraulikleitung ein schaltbares Ventil integriert ist. Das schaltbare Ventil ist dazu eingerichtet, die Hydraulikleitung im Bedarfsfall zu öffnen oder zu verschließen. Im geöffneten Zustand ermöglicht das schaltbare Ventil somit, dass Hydraulikmittel über die Hydraulikleitung aus der Zylinder-Kolben-Anordnung in den Vorratsbehälter fließt. Im geschlossenen Zustand verschließt das schaltbare Ventil die Hydraulikleitung, wodurch ein Zurückfließen des Hydraulikmittels aus der Zylinder-Kolben-Anordnung durch die Hydraulikleitung in den Vorratsbehälter verhindert wird, hierdurch kann der im Arbeitsraum der Zylinder-Kolben-Anordnung aufgebaute hydraulische Druck gehalten werden. Es ist durch diese alternative Ausgestaltungsform der Erfindung in vorteilhafter Weise sichergestellt, dass ein Druckabbau und damit eine bestimmungsgemäße Sicherheitsbremsung auch ohne eine Schaltung des elektrisch schaltbaren Ventils in der Bypass-Leitung erfolgen kann.

Gemäß einem weiteren Merkmal der Erfindung ist es vorgesehen, dass das schaltbare Ventil elektrisch schaltbar ist.

Gemäß einem weiteren Merkmal der Erfindung ist vorgesehen, dass das schaltbare Ventil derart eingerichtet ist, dass es im stromlosen Zustand geschlossen und im bestromten Zustand geöffnet ist. Im stromlosen Zustand verschließt das schaltbare Ventil somit die Hydraulikleitung und verhindert, dass Hydraulikmittel aus dem Arbeitsraum der Zylinder-Kolben-Anordnung in den Vorratsbehälter zurückfließen kann. Im stromlosen Zustand verbraucht das schaltbare Ventil keinen Strom. Folglich ist ein bestimmungsgemäßes Geöffnethalten der Bremse, Kupplung oder Kupplungsbremskombination energieeffizient möglich. Im bestromten Zustand ist das schaltbare Ventil geöffnet und das Hydraulikmittel aus dem im Arbeitsraum der Zylinder-Kolben-Anordnung fließt in den Vorratsbehälter ab.

Gemäß einem weiteren Merkmal der Erfindung ist es vorgesehen, dass das schaltbare Ventil als proportionales Druckbegrenzungsventil ausgebildet ist. In dieser Ausführungsform wird das schaltbare Ventil über einen von einer Feder erzeugten Gegendruck gegenüber dem Druck des Hydraulikmittels geschlossen gehalten. Die Einstellung des Gegendrucks erfolgt durch einen an das schaltbare Ventil angelegten Steuerstrom. Dabei sinkt der Gegendruck mit steigendem Steuerstrom ab. Das bedeutet, je stärker der angelegte Steuerstrom ist, desto geringer ist der vom schaltbaren Ventil bereitgestellte Gegendruck. Im stromlosen Zustand wird somit der maximale Gegendruck von dem schaltbaren Ventil bereitgestellt.

Dadurch, dass der vom schaltbaren Ventil bereitgestellte Gegendruck einstellbar ist, kann über den Gegendruck die Bremskraft gesteuert werden. Es ergibt sich in vorteilhafterweise die Möglichkeit unterschiedliche Bremsgeschwindigkeiten zu realisieren. So wird durch diese Ausführungsform insbesondere ein sanftes Abbremsen und/oder ein sanftes Lösen der Sicherheitsbremse ermöglicht.

Gemäß einem weiteren Merkmal der Erfindung ist vorgesehen, dass das schaltbare Ventil an die Steuereinrichtung signaltechnisch angeschlossen ist. Das schaltbare Ventil ist somit mit dem Elektromotor und dem elektrisch schaltenden Ventil der Bypass-Leitung an eine gemeinsame Steuereinrichtung signaltechnisch angeschlossen. Wenn die Bremse, Kupplung oder Kupplungs-Brems-Kombination gelüftet werden soll, sorgt die Steuereinrichtung dafür, dass das schaltbare Ventil in der Hydraulikleitung stromlos und somit geschlossen ist. Im Arbeitsraum der Zylinder-Kolben-Anordnung kann so ein entsprechender Druck zum Geöffnethalten der Bremse aufgebaut werden. Ist der gewünschte Hydraulikmitteldruck im Arbeitsraum der Zylinder-Kolben-Anordnung erreicht, so kann der Elektromotor abgeschaltet werden.

Soll eine Sicherheitsbremsung ausgelöst werden, so wird das schaltbare Ventil der Hydraulikleitung von der Steuereinrichtung bestromt. Infolge der Bestromung wird das schaltbare Ventil geöffnet.

Ein besonderer Vorteil dieser Anordnung ist es, dass durch das stromlos geschlossene schaltbare Ventil der Hydraulikleitung und das elektrisch schaltbare Ventil der Bypass-Leitung, welches lediglich mit einem geringen Haltestrom geschlossen gehalten wird, ein Geöffnethalten der Sicherheitsbremse im bestimmungsgemäßen Verwendungsfall besonders energieeffizient möglich ist. Ein weiterer Vorteil ist, dass es verwenderseitig nicht notwendig ist, das schaltbare Ventil an eine externe Steuereinrichtung anzuschließen.

Gemäß einem weiteren Merkmal der Erfindung ist vorgesehen, dass ein Hydrospeicher vorgesehen ist. Der Hydrospeicher ist dazu eingerichtet, das Hydraulikmittel unter Druck zu speichern. Durch den Hydrospeicher ist es möglich, den gewünschten Druck in dem erfindungsgemäß geschlossenen hydraulischen Kreislauf länger aufrecht zu erhalten, da durch den Hydrospeicher Druckschwankungen durch beispielsweise kleine Leckagen an den Ventilen während den Schaltvorgängen und/oder durch Temperaturschwankungen ausgeglichen werden können. Kommt es z.B. durch eine kleine Leckage an einem der Ventile zu einem Druckverlust im Arbeitsraum, so kann der Druckverlust durch den Hydrospeicher ausgeglichen werden.. Der gewünschte Hydraulikdruck wird demnach länger beibehalten und der Elektromotor muss wesentlich seltener anlaufen. Somit ergibt sich ein energieeffizienter Betrieb im bestimmungsgemäßen Verwendungsfall.

Gemäß einem weiteren Merkmal der Erfindung ist es vorgesehen, dass der Hydrospeicher mit der Hydraulikleitung strömungstechnisch verbunden ist. Der Hydrospeicher ist demnach strömungstechnisch mit der Hydraulikleitung verbunden, die die Hydraulikpumpe mit dem Arbeitsraum der Zylinder-Kolben-Anordnung strömungstechnisch verbindet. Somit liegt der Hydrospeicher in der Hydraulikleitung, die keine Ventile enthält bei deren bestimmungsgemäßem schalten es zu kleinen Leckagen kommen kann.

Gemäß einem weiteren Merkmal der Erfindung ist vorgesehen, dass der Hydrospeicher an einen Zweig der Hydraulikleitung strömungstechnisch angeschlossen ist. Der Zweig ist dabei der Abschnitt der Hydraulikleitung, die die Hydraulikpumpe mit dem Arbeitsraum der Zylinder-Kolben-Anordnung strömungstechnisch verbindet, der das Rückschlagventil und den Arbeitsraum der Zylinder-Kolben-Anordnung strömungstechnisch verbindet. Somit ist der Hydrospeicher strömungstechnisch mit dem Zweig der Hydraulikleitung verbunden, der vom Rückschlagventil aus gesehen in Richtung des Arbeitsraums der Zylinder-Kolben-Anordnung weist. Es ist somit für den Hydrospeicher in vorteilhafterweise möglich den gewünschten Hydraulikdruck im Arbeitsraum der Zylinder-Kolben-Anordnung nach z. B. einem Druckverlust direkt wieder aufzubauen, ohne dass das den Hydraulikdruck erzeugende Hydraulikmittel zunächst das Rückschlagventil passieren muss.

Gemäß einem weiteren Merkmal der Erfindung ist vorgesehen, dass das die Steuereinrichtung, das elektrisch schaltende Ventil, den Vorratsbehälter und die Hydraulikpumpe aufnehmende Gehäuse ebenso das schaltbare Ventil und/oder den Hydrospeicher aufnimmt.

Durch diese Ausführungsform wird eine besonders kompakte Bauform erreicht. Das schaltbare Ventil und/oder der Hydrospeicher sind mit der Steuereinrichtung, dem elektrisch schaltenden Ventil, dem Vorratsbehälter und der Hydraulikgruppe zu einer Baugruppe zusammengefasst und gemeinsam in einem dafür vorgesehenen Gehäuse untergebracht. Es ist somit anwenderseitig lediglich notwendig, die Bremse, Kupplung oder Kupplungs-Brems-Kombination an eine Signalleitung für die Steuereinrichtung einerseits und an eine elektrische Stromversorgung für den Elektromotor der Hydraulikpumpe und die elektrisch schaltenden Ventile anzuschließen. Es ergibt sich so der Vorteil einer einfacheren Handhabung.

Mit der erfindungsgemäßen Ausgestaltung wird insgesamt ein geschlossenes System bereitgestellt. Eine an sich hydraulisch arbeitende Sicherheitsbremse oder -kupplung ist mit einem Hydraulikaggregat ausgestattet, das in seiner Auslegung einen bestimmungsgemäßen Betrieb nur der zugehörigen Bremse oder Kupplung ermöglicht. Es wird mithin eine hydraulisch arbeitende Bremse oder Kupplung vorgeschlagen, die mit einem für diese Bremse oder Kupplung maßgeschneiderten Hydraulikaggregat ausgerüstet ist. Die gesamte Anordnung ist vorzugsweise gekapselt ausgebildet, sodass für einen späteren Verwender dem Grunde nach gar nicht erkennbar ist, dass es sich um eine hydraulisch arbeitende Bremse oder Kupplung handelt. Die Ansteuerung des Hydraulikaggregats erfolgt elektromotorisch, sodass es nur eines Anschlusses für entsprechende Signalleitungen bedarf, nicht aber für hydraulische Leitungen, obwohl die Bremse oder Kupplung rein hydraulisch arbeitet. Ein späterer Verwender der erfindungsgemäßen Bremse oder Kupplung muss sich mithin nur um die elektrische Ansteuerung kümmern bzw. entsprechende Einrichtungen für diese vorhalten.

Im Ergebnis dieser Ausgestaltung steht insbesondere in vorteilhafter Weise eine kompakte Ausführung bei gleichzeitiger Bereitstellung hoher übertragbarer Drehmomente sowie die Möglichkeit, eine exakte Regelung bzw. Steuerung bewirken zu können. Die Sicherheitsfunktion der erfindungsgemäßen Bremse bzw. Kupplung ist dabei in vorteilhafter Weise nach wie vor gegeben. Denn es ist in schon vorbeschriebener Weise eine Bypass-Leitung vorgesehen, in die ein elektrisch schaltendes Ventil integriert ist, das im Notfall, wenn also die Stromversorgung abbricht, automatisch öffnet. Bei geöffnetem Ventil bricht die hydraulische Gegenkraft zusammen, sodass es infolge des auf das Gegenstück einwirkenden Kraftgebers automatisch zu einer Überführung der Bremse in die Bremsstellung bzw. der Kupplung in die nicht-gekuppelte Stellung kommt.

Des Weiteren ist durch das stromlos geschlossene schaltbare Ventil der Hydraulikleitung und das elektrisch schaltbare Ventil der Bypass-Leitung, welches lediglich mit einem geringen Haltestrom geschlossen gehalten wird, ein Geöffnethalten der Sicherheitsbremse im bestimmungsgemäßen Verwendungsfall besonders energieeffizient möglich. Durch den Hydrospeicher ist es möglich, den gewünschten Druck in dem erfindungsgemäß geschlossenen hydraulischen Kreislauf länger aufrecht zu erhalten, da durch den Hydrospeicher Druckschwankungen durch beispielsweise kleine Leckagen an den Ventilen während den Schaltvorgängen und/oder durch Temperaturschwankungen ausgeglichen werden können. Dadurch, dass der gewünschte Hydraulikdruck demnach länger beibehalten wird und der Elektromotor wesentlich seltener anlaufen muss, ist ein Geöffnethalten der Sicherheitsbremse im bestimmungsgemäßen Verwendungsfall besonders energieeffizient möglich. So ergibt sich durch die Ausgestaltung der Ventile und den Hydrospeicher in Summe ein besonders geringer Energieverbrauch im bestimmungsgemäßen Verwendungsfall, wodurch die hydraulische Sicherheitsbremse oder -kupplung besonders umweltfreundlich betrieben werden kann.

Weitere Merkmale und Vorteile der Erfindung ergeben sich aus der nachfolgenden Beschreibung anhand der Figuren. Dabei zeigt
- Fig. 1: in schematischer Schnittdarstellung eine erfindungsgemäße Ausgestaltung am Beispiel einer Sicherheitsbremse,
- Fig. 2: schematisch eine Funktionsdarstellung und
- Fig. 3: schematisch eine Funktionsdarstellung einer alternative erfindungsgemäße Ausführungsform.

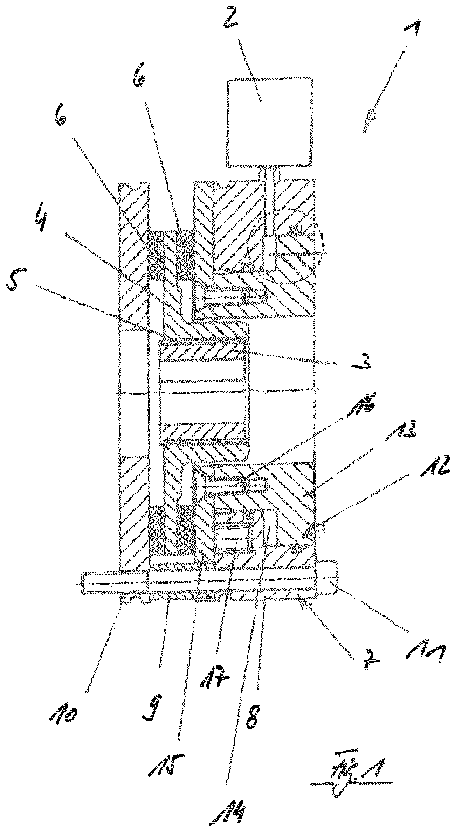

Fig. 1 lässt in einer schematischen Schnittdarstellung eine erfindungsgemäße Ausgestaltung anhand einer Sicherheitsbremse 1 erkennen.

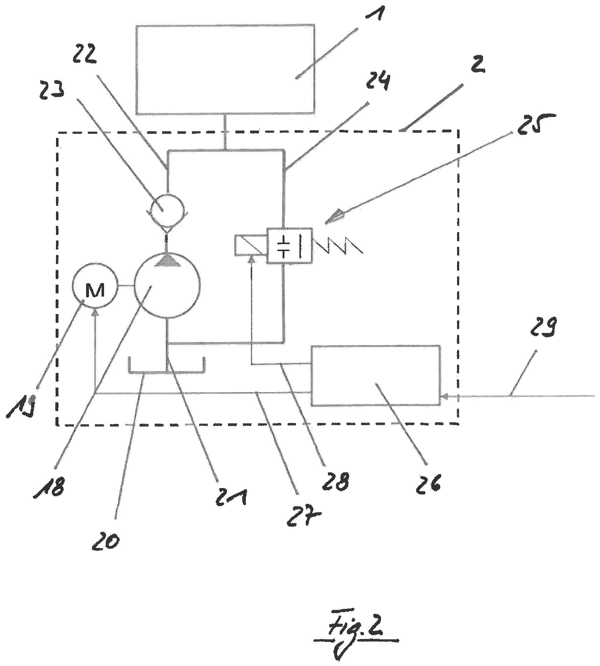

Die Sicherheitsbremse 1 ist in an sich bekannter Weise ausgebildet und verfügt über ein erfindungsgemäßes Hydraulikaggregat 2, welches im Detail in Fig. 2 dargestellt ist.

Die Sicherheitsbremse 1 verfügt über eine verdrehbar ausgebildete Rotorscheibe 4, die verdrehfest auf einer in Fig. 1 nicht näher dargestellten Welle angeordnet ist. Die Anordnung der Rotorscheibe 4 auf der Welle ist verdrehfest, gleichwohl aber axial verschieblich, zu welchem Zweck eine Nabe 3 zum Einsatz kommt. Zwecks axial verschieblicher Anordnung ist eine zwischen Nabe 3 und Rotorscheibe 4 wirkende Verzahnung 5 vorgesehen.

Die Rotorscheibe 4 trägt beidseitig Reibbeläge 6. Alternativ zu dieser Ausführungsform können auch separate Reibscheiben oder mit Reibbelägen 6 ausgerüstete Lamellen vorgesehen sein.

Die Sicherheitsbremse 1 verfügt des Weiteren über ein ortsfestes Gehäuse 7. Dieses Gehäuse 7 verfügt über zwei Gehäuseteile 8 und 10, die unter Zwischenordnung eines Distanzstücks 9 voneinander beabstandet und mittels Schrauben 11 miteinander verbunden sind.

Das Gehäuseteil 8 wirkt zugleich als Zylinder in einer Zylinder-Kolben-Anordnung 12. Dabei ist vom Zylinder 8 axial beweglich ein Hydraulikkolben 13 aufgenommen. Dieser bildet in Wirkverbindung mit dem Zylinder 8 eine Arbeitskammer 14 aus.

Mit dem Hydraulikkolben 13 ist ein Gegenstück 15 in der Ausgestaltung einer Druckplatte verbunden. Dabei dienen zur Anordnung des Gegenstücks 15 am Hydraulikkolben 13 entsprechende Schrauben 16.

Das als Zylinder dienende Gehäuseteil 8 stellt ferner Ausnehmungen bereit, in die jeweils als Kraftgeber 17 dienende Federn eingesetzt sind. Diese Kraftgeber 17 wirken auf das mit dem Hydraulikkolben 13 verbundene Gegenstück 15 ein.

In geschlossener Stellung der Sicherheitsbremse 1 wirken die Kraftgeber 17 auf das Gegenstück 15 ein und drücken dieses samt dem daran angeschlossenen Hydraulikkolben 13 axial in Richtung des als Widerlagerplatte dienenden Gehäuseteils 10. Infolgedessen wird die zwischen Gehäuseteil 10 und Gegenstück 15 angeordnete Rotorscheibe 4 festgesetzt, und damit auch eine die Rotorscheibe 4 verdrehfest tragende Welle.

Für ein Öffnen der Sicherheitsbremse 1, d. h. für ein Überführen der Sicherheitsbremse 1 aus der vorbeschriebenen Bremsstellung in eine in Fig. 1 gezeigte Offen-Stellung, ist mittels des Hydraulikaggregats 2 Hydraulikmittel in den Arbeitsraum 14 einzuleiten. Infolgedessen wird der Hydraulikkolben 3 axial verschoben, und zwar mit Bezug auf die Zeichnungsebene nach Fig. 1 nach rechts. Das mit dem Hydraulikkolben 13 verbundene Gegenstück 15 wird infolgedessen mitbewegt, sodass sich eine vergrößerte Beabstandung zwischen dem Gegenstück 15 und dem Gehäuseteil 10 mit der Folge ergibt, dass die Rotorscheibe 4 freigegeben wird, sodass alsdann eine Verdrehbewegung derselben ermöglicht ist. Diese Offen-Stellung der Sicherheitsbremse 1 ist in Fig. 1 dargestellt.

Das Hydraulikaggregat 2 dient ausschließlich einer Betätigung der Zylinder-Kolben-Anordnung 12 der einen in Fig. 1 gezeigten Sicherheitsbremse 1. Es ist dementsprechend dimensioniert und nicht dazu ausgelegt, auch andere Zylinder-Kolben-Anordnungen anderer Sicherheitsbremsen gleichsam betätigen zu können.

Wie sich aus der Darstellung nach Fig. 2 ergibt, verfügt das Hydraulikaggregat 2 über eine Hydraulikpumpe 18, die über einen Elektromotor 19 betreibbar ist. Mittels einer Hydraulikleitung 21 ist die Hydraulikpumpe 18 strömungstechnisch mit einem Vorratsbehälter 20 verbunden. Über eine weitere Hydraulikleitung 22 steht die Hydraulikpumpe in strömungstechnischer Verbindung mit der Sicherheitsbremse 1, d. h. mit dem Arbeitsraum 14 der schon vorbeschriebenen Zylinder-Kolben-Anordnung 12. Dabei ist in die Hydraulikleitung 22 ein Rückschlagventil 23 integriert.

Wie sich aus der Darstellung nach Fig. 2 ferner ergibt, ist eine die Hydraulikpumpe 18 umgehende Bypass-Leitung 24 vorgesehen. Diese verbindet die Zylinder-Kolben-Anordnung 12 der Sicherheitsbremse 1 strömungstechnisch mit dem Vorratsbehälter 20. In diese Bypass-Leitung 24 ist ein elektrisch schaltendes Ventil 25 integriert.

Das Hydraulikaggregat 2 verfügt des Weiteren über eine Steuerungseinrichtung 26. Diese steht in signaltechnischer Verbindung sowohl mit dem elektrisch schaltenden Ventil 25 als auch mit dem Elektromotor 19 der Hydraulikpumpe 18, zu welchem Zweck entsprechende Signalleitungen 27 und 28 vorgesehen sind.

Die Steuerungseinrichtung 26 ist ferner an eine Anschlussleitung 29 angeschlossen, über die von außen ein Zugriff auf die Steuerungseinrichtung 26 ermöglicht ist.

Das elektrisch schaltende Ventil 25 sowie die der Elektromotor 19 sind ferner an eine elektrische Stromversorgung angeschlossen, die in Fig. 2 nicht im Näheren dargestellt ist.

Die erfindungsgemäße Ausgestaltung ermöglicht eine Funktionsweise wie folgt:
Um die Sicherheitsbremse 1 zu öffnen, ist in schon vorbeschriebener Weise in den Arbeitsraum 14 der Zylinder-Kolben-Anordnung 12 Hydraulikmittel einzuführen. Zu diesem Zweck steuert die Steuereinrichtung 26 sowohl das elektrisch schaltende Ventil 25 als auch den Elektromotor 19 an, woraufhin diese bestromt werden. In der Folge ist die Bypass-Leitung 24 durch das geschaltete Ventil 25 geschlossen und die Hydraulikpumpe 18 erzeugt mittels des dafür vorgesehenen Elektromotors 19 im Arbeitsraum 14 einen entsprechenden hydraulischen Druck. Bei hinreichender Dichtigkeit des hydraulischen Systems ist es dabei nicht erforderlich, dass zur Druckaufrechterhaltung der Elektromotor 19 unablässig betrieben wird. Es ist vielmehr die einmalige hinreichende Druckausbildung durch den Elektromotor 19 ausreichend.

Infolge der Ausbildung des hydraulischen Drucks verfährt in schon vorbeschriebener Weise der Hydraulikkolben 13 mit der Folge, dass die Rotorscheibe 4 freigegeben wird.

Für ein Schließen der Sicherheitsbremse 1 ist das Ventil 25 zu öffnen. Zu diesem Zweck ist das Ventil 25 stromlos zu stellen. Zudem ist der Elektromotor 19 stromlos zu stellen, sodass keine Drucknachförderung stattfindet.

Bei geöffnetem Ventil 25 ist der Arbeitsraum 14 insoweit drucklos gestellt, als dass darin befindliche Hydraulikflüssigkeit über die Bypass-Leitung 24 und das geöffnete Ventil 25 zurück in den Vorratsbehälter 20 strömen kann. Infolgedessen wird durch den Kraftgeber 17 eine Rücküberführung des Hydraulikkolbens in die Bremsstellung erreicht.

Die Sicherheitsfunktion der Sicherheitsbremse 1 ist sowohl in schon vorbeschriebener Weise hydraulisch sichergestellt, als auch elektrisch, da im Falle eines Stromausfalls das Ventil 25 automatisch öffnet, womit die Sicherheitsbremse 1 zurück in ihre Bremsstellung überführt wird.

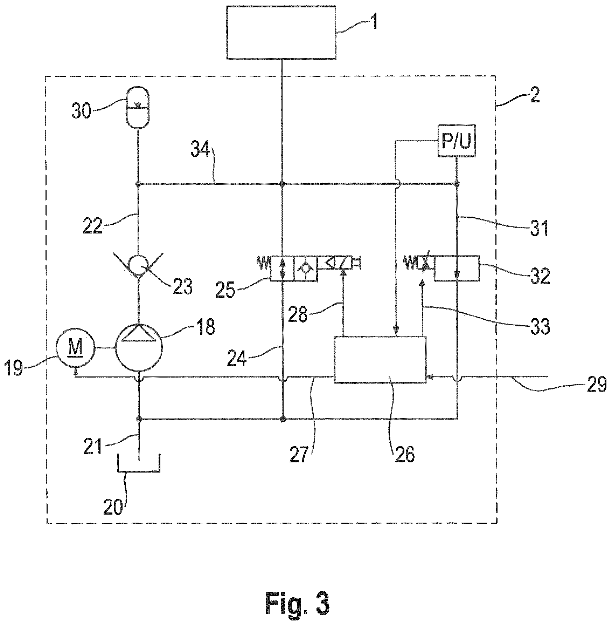

Figur 3 zeigt eine alternative Ausführungsform des erfindungsgemäßen Hydraulikaggregates 2. Diese alternative Ausführungsform weist alle Komponenten der vorangehend beschriebenen Ausführungsform auf. Zusätzlich verfügt die alternative Ausführungsform über weitere Komponenten.

In der alternativen Ausführungsform ist ein schaltbares Ventil 32 vorgesehen, welches in eine Hydraulikleitung 31 integriert ist. Die Hydraulikleitung 31 verbindet strömungstechnisch den Arbeitsraum 14 der Zylinder-Kolben-Anordnung 12 mit dem Vorratsbehälter 20. Das schaltbare Ventil 32 ist vorzugsweise elektrisch ausgebildet, wobei es in einer besonders bevorzugten Ausführungsform so ausgebildet ist, dass es im stromlosen Zustand geschlossen und im bestromten Zustand geöffnet ist.

Das schaltbare Ventil 32 ist in dieser Ausführungsform mittels einer Signalleitung 33, ebenso wie der Elektromotor 19 und das elektrisch schaltbare Ventil 25, an die gemeinsame Steuereinrichtung 26 signaltechnisch angeschlossen. Wird das schaltbare Ventil 32 von der Steuereinrichtung 26 stromlos gestellt und das elektrisch schaltbare Ventil 25 von der Steuereinrichtung 26 bestromt, so kann der Elektromotor 19 von der Steuereinrichtung 26 bestromt werden und die durch den Elektromotor 19 angetriebene Hydraulikpumpe 18 kann einen Druckaufbau im Arbeitsraum 14 der Zylinder-Kolben-Anordnung 12 erwirken. Ist der gewünschte Hydraulikdruck erreicht, wird durch die Steuereinrichtung 26 die Hydraulikpumpe 18 und der Elektromotor 19 abgestellt. Durch die beiden geschlossenen Ventile 25, 32 sowie das Rückschlagventil 23 wird der Druck im Arbeitsraum 14 aufrechtgehalten und die Sicherheitsbremse 1 im geöffneten Zustand gehalten.

Um die Sicherheitsbremse 1 zu schließen ist auch in dieser alternativen Ausführungsform der Arbeitsraum 14 drucklos zu stellen.

Hierzu wird das schaltbare Ventil 32 von der Steuereinrichtung 26 mit einem Steuerstrom bestromt, wodurch der von einer Feder in dem schaltbaren Ventil 32 erzeugte Gegendruck gesenkt wird. Je stärker das schaltbare Ventil 32 bestromt wird, desto geringer ist der vom schaltbaren Ventil 32 bereitgestellte Gegendruck. Im stromlosen Zustand wird von dem schaltbaren Ventil 32 der maximale Gegendruck bereitgestellt. Über die Einstellung des Gegendrucks ist die Bremskraft steuerbar. Es ergibt sich somit in vorteilhafterweise die Möglichkeit unterschiedliche Bremsgeschwindigkeiten zu realisieren. So wird durch diese Ausführungsform insbesondere ein sanftes Abbremsen und/oder ein sanftes Lösen der Sicherheitsbremse 1 ermöglicht.

Beim erfindungsgemäßen Einsatz wird die Bremse, Kupplung und/oder Kupplungs-Brems-Kombination über längere Zeiträume in einem gelüfteten Zustand gehalten. Durch beispielweise Temperaturschwankungen und/oder Leckagen an den Ventilen während den Schaltvorgängen kann es jedoch zu unbeabsichtigten Druckschwankungen im Arbeitsraum 14 kommen. Um beispielsweise einen Druckabbau auszugleichen und die Sicherheitsbremse sicher geöffnet zu halten, müsste die Hydraulikpumpe 18 und damit auch der angeschlossene Elektromotor 19 anlaufen, um so den gewünschten Hydraulikdruck im Arbeitsraum 14 aufrecht zu erhalten. Ein dauerhaftes, energieeffizientes Geöffnethalten der Sicherheitsbremse ist so nicht möglich.

Durch den in Figur 3 dargestellten Hydrospeicher 30, welcher strömungstechnisch mit einem oberen Zweig 34 der Hydraulikleitung 22 verbunden ist, welcher das Rückschlagventil 23 und den Arbeitsraum 14 der Zylinder-Kolben-Anordnung 12 strömungstechnisch verbindet, wird es ermöglicht Druckschwankungen durch Temperaturschwankungen und/oder kleine Leckagen an den Ventilen während den Schaltvorgängen auszugleichen. Durch den Hydrospeicher 30 wird es demnach ermöglicht, dass der gewünschte Hydraulikdruck im Arbeitsraum 14 über einen längeren Zeitraum aufrechterhalten wird, ohne dass z. B. im Falle eines Druckverlustes ein erneutes Anlaufen der Hydraulikpumpe 18 und des Elektromotors 19 nötig ist. Somit ist ein energieeffizientes Geöffnethalten der Sicherheitsbremse 1 über einen längeren Zeitraum möglich.

Die erfindungsgemäße Ausgestaltung ist anhand der Fig. 1, 2 und 3 am Beispiel einer Sicherheitsbremse 1 erläutert. Eine Sicherheitskupplung ist hierzu umgekehrt gleichwirkend ausgebildet.

### Bezugszeichen

- 1: Sicherheitsbremse
- 2: Hydraulikaggregat
- 3: Nabe
- 4: Rotorscheibe
- 5: Verzahnung
- 6: Reibbelag
- 7: Gehäuse
- 8: Gehäuseteil (Zylinder)
- 9: Distanzstück
- 10: Gehäuseteil (Widerlagerplatte)
- 11: Schraube
- 12: Zylinder-Kolben-Anordnung
- 13: Hydraulikkolben
- 14: Arbeitsraum
- 15: Gegenstück (Druckplatte)
- 16: Schraube
- 17: Kraftgeber (Feder)
- 18: Hydraulikpumpe
- 19: Elektromotor
- 20: Vorratsbehälter
- 21: Hydraulikleitung
- 22: Hydraulikleitung
- 23: Rückschlagventil
- 24: Bypass-Leitung
- 25: Ventil
- 26: Steuereinrichtung
- 27: Signalleitung
- 28: Signalleitung
- 29: Anschlussleitung
- 30: Hydrospeicher
- 31: Hydraulikleitung
- 32: Ventil
- 33: Signalleitung
- 34: Zweig

## Patentansprüche

1. Hydraulische Bremse, Kupplung oder Kupplungs-Brems-Kombination für eine Arbeitsmaschine, die mittels eines von einer Hydraulikpumpe (18) geförderten Hydraulikmittels schaltbar ausgebildet ist, mit einer auf einer Welle verdrehfest, gleichwohl aber axial verschieblich angeordneten Rotorscheibe (4) und einem damit zusammenwirkenden Gegenstück (15), wobei das Gegenstück (15) in Relation zur Rotorscheibe (4) axial verschieblich gelagert ist, mit einem mechanischen Kraftgeber (17), der dazu eingerichtet ist, das Gegenstück (15) in axialer Richtung mit Kraft zu beaufschlagen, sowie mit einem von einer Zylinder-Kolben-Anordnung (12) bereitgestellten Hydraulikkolben (13), der in axialer Richtung verfahrbar ausgebildet und dazu eingerichtet ist, im Falle einer Druckbeaufschlagung mit von der Hydraulikpumpe (18) geförderten Hydraulikmittel entgegen der durch den Kraftgeber (17) bewirkten Kraftbeaufschlagung auf das Gegenstück (15) einzuwirken, wobei die Hydraulikpumpe (18) mit einem Hydraulikmittel beherbergenden Vorratsbehälter (20) strömungstechnisch zusammenwirkt, wobei die Hydraulikpumpe (18) und der Vorratsbehälter (20) für eine bestimmungsgemäße Verwendung ausschließlich mit der Zylinder-Kolben-Anordnung (12) ausgelegt sind, und wobei die Hydraulikpumpe (18) einen Elektromotor (19) aufweist, **dadurch gekennzeichnet, dass** eine die Hydraulikpumpe (18) strömungstechnisch umgehende Bypass-Leitung (24) vorgesehen ist, die den Vorratsbehälter (20) mit der Zylinder-Kolben-Anordnung (12) strömungstechnisch verbindet, wobei in die Bypass-Leitung (24) ein elektrisch schaltbares Ventil (25) integriert ist, das dazu eingerichtet ist, die Bypass-Leitung (24) im Falle einer Stromlosstellung des Ventils (25) zu öffnen, und dass der Elektromotor (19) sowie das elektrisch schaltende Ventil (25) signaltechnisch an eine gemeinsame Steuereinrichtung (26) angeschlossen sind, wobei die Steuereinrichtung (26), das elektrisch schaltende Ventil (25), der Vorratsbehälter (20) und die Hydraulikpumpe (18) gekapselt ausgebildet und in einem gemeinsamen Gehäuse untergebracht sind.

2. Bremse, Kupplung oder Kupplungs-Brems-Kombination nach Anspruch 1, **dadurch gekennzeichnet, dass** gehäuseaußenseitig zugängliche Anschlüsse für einen Signalanschluss der Steuereinrichtung (26) einerseits und für einen elektrischen Anschluss des Elektromotors (19) und des elektrisch schaltenden Ventils (25) andererseits vorgesehen sind.

3. Bremse, Kupplung oder Kupplungs-Brems-Kombination nach Anspruch 1 oder 2, **dadurch gekennzeichnet, dass** das die Steuereinrichtung (26), das elektrisch schaltende Ventil (25), den Vorratsbehälter (20) und die Hydraulikpumpe (18) aufnehmende Gehäuse als ein Gehäuseteil eines die Bremse oder die Kupplung beherbergenden Gehäuses ausgebildet ist.

4. Bremse, Kupplung oder Kupplungs-Brems-Kombination nach Anspruch 1 oder 2, **dadurch gekennzeichnet, dass** das die Steuereinrichtung (26), das elektrisch schaltende Ventil (25), den Vorratsbehälter (20) und die Hydraulikpumpe (18) aufnehmende Gehäuse als ein zu einem die Bremse oder die Kupplung aufnehmenden Gehäuse separates Gehäuse ausgebildet ist, das an dem Gehäuse der Bremse oder Kupplung angeordnet ist.

5. Bremse, Kupplung oder Kupplungs-Brems-Kombination nach einem der vorhergehenden Ansprüche, **dadurch gekennzeichnet, dass** die Hydraulikpumpe (18) mittels einer Hydraulikleitung (22) mit der Zylinder-Kolben-Anordnung (12) hydraulisch verbunden ist, wobei in die Hydraulikleitung (22) ein Rückschlagventil (23) integriert ist.

6. Bremse, Kupplung oder Kupplungs-Brems-Kombination nach einem der vorhergehenden Ansprüche, **dadurch gekennzeichnet, dass** das elektrisch schaltbare Ventil (25) derart eingerichtet ist, dass für ein Halten einer Ventilstellung im Vergleich zu einem Schalten in eine andere Ventilstellung ein verringerter Stromverbrauch stattfindet.

7. Bremse, Kupplung oder Kupplungs-Brems-Kombination nach einem der vorhergehenden Ansprüche, **dadurch gekennzeichnet, dass** eine die Hydraulikpumpe (18) strömungstechnisch umgehende Hydraulikleitung (31) vorgesehen ist, die den Vorratsbehälter (20) mit der Zylinder-Kolben-Anordnung (12) strömungstechnisch verbindet, wobei in die Hydraulikleitung (31) ein schaltbares Ventil (32) integriert ist.

8. Bremse, Kupplung oder Kupplungs-Brems-Kombination nach Anspruch 7, **dadurch gekennzeichnet, dass** das schaltbare Ventil (32) elektrisch schaltbar ist.

9. Bremse, Kupplung oder Kupplungs-Brems-Kombination nach Anspruch 8, **dadurch gekennzeichnet, dass** das schaltbare Ventil (32) derart eingerichtet ist, dass es im stromlosen Zustand geschlossen und im bestromten Zustand geöffnet ist.

10. Bremse, Kupplung oder Kupplungs-Brems-Kombination nach einem der Ansprüche 7 bis 9, **dadurch gekennzeichnet, dass** das schaltbare Ventil (32) als proportionales Druckbegrenzungsventil ausgebildet ist.

11. Bremse, Kupplung oder Kupplungs-Brems-Kombination nach einem der Ansprüche 7 bis 10, **dadurch gekennzeichnet, dass** das schaltbare Ventil (32) an die Steuereinrichtung (26) signaltechnisch angeschlossen ist.

12. Bremse, Kupplung oder Kupplungs-Brems-Kombination nach einem der vorhergehenden Ansprüche, **dadurch gekennzeichnet, dass** ein Hydrospeicher (30) vorgesehen ist.

13. Bremse, Kupplung oder Kupplungs-Brems-Kombination nach Anspruch 12, **dadurch gekennzeichnet, dass** der Hydrospeicher (30) mit der Hydraulikleitung (22) strömungstechnisch verbunden ist.

14. Bremse, Kupplung oder Kupplungs-Brems-Kombination nach Anspruch 13, **dadurch gekennzeichnet, dass** der Hydrospeicher (30) an einen Zweig (34) der Hydraulikleitung (22) strömungstechnisch angeschlossen ist.

15. Bremse, Kupplung oder Kupplungs-Brems-Kombination nach Anspruch 7 bis 14, **dadurch gekennzeichnet, dass** das die Steuereinrichtung (26), das elektrisch schaltende Ventil (25), den Vorratsbehälter (20) und die Hydraulikpumpe (18) aufnehmende Gehäuse ebenso das schaltbare Ventil (32) und/oder der Hydrospeicher (30) aufnimmt.
